# NEUE EUROPÄISCHE PATENTSCHRIFT

(11) **EP 0 534 181 B2**
(45) Veröffentlichungstag und Bekanntmachung des Hinweises auf die Entscheidung über den Einspruch: **14.06.2000**
(45) Hinweis auf die Patenterteilung: 14.05.1997
(21) Anmeldenummer: 92115024.9
(22) Anmeldetag: 03.09.1992
(51) Int. Cl.: G07C 3/14, B29C 45/76

(54) **Verfahren zur Ermittlung unzulässiger Abweichungen von Verfahrensparametern**
Method for detecting inadmissible deviations of procedure parameters
Méthode pour détecter des déviations inadmissibles de paramètres d'un procédé

(30) Priorität: 26.09.1991 DE 4132002
(43) Veröffentlichungstag der Anmeldung: 31.03.1993
(73) Patentinhaber: Müller Weingarten AG, D-88250 Weingarten (DE)
(72) Erfinder: Stummer, Friedrich, Dr.-Ing., W-7012 Fellbach (DE)
(74) Vertreter: Patentanwälte Eisele, Otten, Roth & Dobler

(56) Entgegenhaltungen:
- EP-A- 0 084 284
- EP-A- 0 128 722
- DE-A- 4 025 221
- US-A- 3 946 212
- US-A- 4 719 586
- KUNSTSTOFFE, Bd. 81, Nr. 2, Februar 1991 , MÜNCHEN, DE, Seiten 103 - 108; SCHWAB: 'Rechnergestützte Qualitätssicherung beim Spritzgiessen'
- PLASTVERARBEITER, Bd. 41, Nr. 4, Februar 1990 , SPEYER, DE, Seiten 134 - 140; BOURDON: 'Statistische Prozesskontrolle (SPC) beim Spritzgiessen'
- PLASTVERARBEITER, Bd. 34, Nr. 3, März 1983, SPEYER, DE, Seiten 213 - 218; KÄUFER: 'Produktadaptive Spritzgiessmaschinensteuerung'
- KUNSTSTOFFE, Bd. 81, Nr. 5, Mai 1991, MüNCHEN, DE, Seiten 394 - 397; ACKERMANN: 'Spritzgiessen mit aktiver Qualitätsüberwachung'
- PATENT ABSTRACTS OF JAPAN, vol. 10, no. 118 (M-475)(2175), 2. Mai 1986 & JP-A-60 247 538 (NITSUSEI JIYUSHI), 7. Dezember 1985
- "STATISTICAL PROCESS CONTROL (SPC) AS AN AID IN QUALITY ASSURANCE AND ENHANCEMENT", Vortrag auf dem 13. Internationalen Druckgusskongress München 28.5.-1.6.1990

## Beschreibung

Die Erfindung betrifft ein Verfahren zur Ermittlung unzulässiger Abweichungen von Verfahrensparametern insbesondere bei Druckgußmaschinen oder dgl. gemäß dem Patentspruch 1.

Aus einem öffentlichen Vortrag beim 13. Internationalen Druckgußkongreß, München 28.5.-1.6.1990, ist eine Literaturstelle unter der Bezeichnung "Statistical Process Control (SPC) as an Aid in Quality Assurance and Enhancement" bekanntgeworden. Hier werden zur Druckgußmaschinensteuerung für jeweils einen bestimmten Parameter, wie Kolbengeschwindigkeit oder Kolbendruck, einzelne Referenzkurven für optimale Werte mit einer Toleranzbandbreite als Datensätze gespeichert. Während der späteren Serienfertigung von Teilen findet stets ein Istwert-Sollwert-Vergleich zwischen den gemessenen und den gespeicherten Daten statt, wobei die Toleranzbandbreite der Referenzkurve die zulässigen Istwerte bestimmt.

Bei einem in der DE 31 11 425 C2 beschriebenen. Verfahren werden in einer Lernphase während eines Arbeitsablaufes einer Werkzeugmaschine mehrere aufeinanderfolgende Werte einer Betriebsgröße gespeichert und unter Berücksichtigung zulässiger Toleranzabweichungen daraus Grenzwerte gebildet. In einer Überwachungsphase wird anschließend ermittelt, ob die dann auftretenden Werte der Betriebsgröße diese Grenzwerte unter- oder überschreiten. Zur Bildung des Grenzwerts für die Überwachungsphase wird entweder der Maximalwert oder der Minimalwert oder der Durchschnittswert der in der Lernphase gespeicherten Werte benutzt. Ziel dieser bekannten Lehre ist es, eine Werkzeugmaschine dann stillzulegen, wenn bei deren Betrieb eine Betriebsgröße den so gefundenen Grenzwert über- bzw. unterschreitet.

Bei der Regelung insbesondere von Druckgußmaschinen ist die Erfassung und Abspeicherung von Verfahrensparametern sowie die Bildung von Referenzwerten mit Toleranzintervallen ebenfalls hinlänglich bekannt (EP-B-0 128 722).

So beschreibt beispielsweise die DE 36 22 822 C2 ein Verfahren zur Steuerung einer Maschine mit entsprechenden Steuerwerten, wobei die Betriebsbedingungen der Maschine detektiert, Steuerparameter abgespeichert und die Steuerwerte aufgrund der detektierten Betriebsbedingungen ermittelt werden, unter deren Verwendung die Maschine gesteuert wird.

In der Praxis wurden bis heute vielfältige Versuche unternommen, um die Abhängigkeiten mehrerer Parameter untereinander, deren Einstellungen sich beim Betrieb einer Fertigungsanlage auf die Güte eines Endproduktes auswirken, regeltechnisch in den Griff zu bekommen. Außergewöhnlich viele solcher Parameter gibt es beim Druckgießverfahren, wie beispielsweise die Schmelztemperatur, die Dosiermenge, die Beschleunigung bzw. Geschwindigkeit während der verschiedenen Phasen, die Kraft, die an der Gießkolbenstange anliegt, die Umschaltpunktlage zwischen den einzelnen Phasen, der Speicherdruck bei Beginn der zweiten Phase, die Position des Kolbens beim Umschaltpunkt, die Formtemperaturen, die Auswerferkraft, die Schmiermittelmengen pro Düse, die Sprühzeiten, die Zusammensetzung der Schmelze usw. Die Korrelationen zwischen solchen Größen untereinander und der Güte des gefertigten Teils sind so komplex, daß auch in den modernsten Anlagen ein unerwünscht hoher Anteil an Ausschußteilen entsteht.

Dabei verursacht nicht nur die unerwünschte Fertigung dieser Ausschußteile zusätzliche Kosten, sondern auch die aufwendigen Prüfverfahren, die nach der Herstellung durchgeführt werden müssen, um die Mängel der Ausschußteile sichtbar zu machen.

Es ist deshalb Aufgabe der Erfindung, ein Verfahren anzugeben, das auf der Grundlage der Ermittlung unzulässiger Abweichungen von Verfahrensparametern während des Produktionsvorgangs eine Prognose auf die Güte des dabei gefertigten Produktes erlaubt. Hierdurch könnte der Aufwand, der im Zuge der Qualitätsprüfung der Gußteile betrieben wird, erheblich reduziert werden.

Diese Aufgabe wird ausgehend von einem Verfahren der einleitend bezeichneten Art durch die Merkmale des Anspruchs 1 gelöst.

Der Grundgedanke der Erfindung liegt darin, aus den exakt ermittelten Werten von Verfahrensparametern auf die Güte des dabei produzierten Fertigungsteils rückzuschließen. Hierzu werden grundsätzlich zu jedem hergestellten Teil die jeweiligen Werte eines Parametersatzes erfaßt, zugeordnet und abgespeichert. Eine vorgegebene Anzahl von Teilen wird in einer Art Vorproduktionsphase auf herkömmliche Weise auf ihre Qualität geprüft. Da die jeweiligen Parameterwerte für jedes so geprüfte Teil bekannt sind, ergibt sich somit eine Einteilung der verschiedenen, aus Parameterwerten bestehenden Datensätze in "gute" und "schlechte" Datensätze, je nachdem, ob die zugehörigen Teile brauchbar sind oder nicht.

Denkbar wäre auch eine statistische Analyse aller sich wiederholender Datensätze, wobei die entsprechende Einteilung der Parameterwerte im Ergebnis differenzierter wäre. So könnte man beispielsweise für einen bestimmten, mehrfach aufgetretenen Datensatz ermitteln, daß ein bestimmter Prozentsatz aller Teile, bei deren Fertigung die entsprechende Wertekonstellation vorlag, eine bestimmte Qualität aufweist.

Die so durchgeführte Einteilung aller vorgekommener Datensätze aus der Vorproduktionsphase läßt sich für die anschließend produzierten Teile, d. h. in der eigentlichen Produktionsphase, zur Ausschußerkennung ohne weitere Qualitätsprüfung verwenden. Hat eine im vorigen Abschitt beschriebene statistische Analyse stattgefunden, so läßt sich die Verwendbarkeit eines Datensatzes zur Ausschußerkennung sogar dementsprechend bewerten.

In der nachfolgenden Produktionsphase werden alle gewünschten Parameter ständig abgespeichert und den einzelnen produzierten Teilen zugeordnet. Ein Vergleich des Datensatzes eines bestimmten Teiles mit den wie oben beschrieben, im einfachsten Fall in zwei Klassen, aufgeteilten Referenzdatensätzen aus der Vorproduktionsphase dient als Kriterium zur Klärung der Frage, ob das bei der vorliegenden Wertekonstellation produzierte Teil verwendbar ist oder dem Ausschuß zugeführt werden muß.

Um die Anzahl der Teile, deren Datensätze zu Referenzzwecken verwendet werden, in Grenzen zu halten, kann um diese Referenzwerte ein bestimmtes Intervall gelegt werden, so daß jeder spätere Datensatz, der innerhalb dieses Intervalls liegt, dem zu diesem Intervall gehörenden Referenzdatensatz entsprechend beurteilt wird.

Zu Referenzzwecken sollten in der Vorproduktionsphase zweckmäßigerweise 100 bis 10.000 gefertigte Teile verwendet werden, wobei die Datenerfassung, die Datenanalyse sowie die Verwertung dieser Datenanalyse mit einer ausreichend leistungsfähigen Rechenanlage durchgeführt werden kann.

Die ermittelten Abweichungen der Verfahrensparameter können selbstverständlich auch zur Regelung der Parameter verwendet werden, was vorzugsweise mit der gleichen Rechenanlage durchgeführt werden kann.

Der Ablauf des erfindungsgemäßen Verfahrens sowie eine dazu notwendige Vorrichtung sind in der Zeichnung schematisch dargestellt und nachfolgend näher beschrieben. Darin zeigt
- Fig. 1: ein Flußdiagramm, das eine Ausführungsform der vorliegenden Erfindung darstellt,
- Fig. 2: ein Blockdiagramm, das eine Vorrichtung zur Durchführung des Verfahrens schematisch verdeutlicht und
- Fig. 3: ein Diagramm, in welchem die Einteilung der Referenzdatensätze verdeutlicht wird.

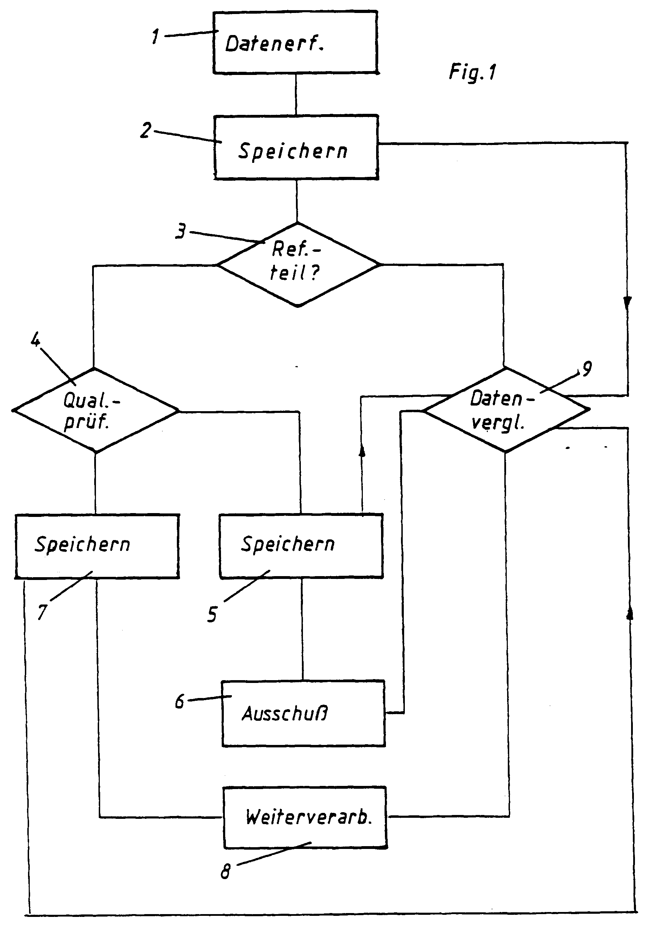

Bei der Produktion eines Gußteils vollzieht sich der in Fig. 1 dargestellte Ablauf. Zunächst werden in einem ersten Schritt 1 die Parameterwerte während der Herstellung des Gußteils erfaßt und in einem zweiten Verfahrensschritt 2 abgespeichert. Im Anschluß daran werden zwei Fälle unterschieden, weshalb an dieser Stelle 3 das Flußdiagramm verzweigt. Soll das gefertigte Teil als Referenzteil für die Ausschußerkennung verwendet werden, so wird es einer Qualitätsprüfung 4 unterzogen. Im Falle einer zerstörenden Prüfung wird das Ergebnis der Qualitätsprüfung abgespeichert 5 und das zerstörte Teil wird natürlich ausgesondert 6. Der gleiche Ablauf findet bei einer zerstörungsfreien Prüfung statt, wenn das Gußteil von schlechter Qualität ist. Besteht das Gußteil die Qualitätsprüfung, so wird das Ergebnis ebenfalls abgespeichert 7 und das gute Gußteil der Weiterverarbeitung 8 zugeführt.

Gelangt das Verfahren bei einem Gußteil, das nicht als Referenzteil Verwendung finden soll, an die Abzweigung 3, so wird anhand des Datenvergleichs 9 mit den im Verfahrensschritt 2 gespeicherten Daten der im Verfahrensschritt 4 beurteilten, qualitativ guten Teilen entschieden, ob es dem Ausschuß 6 zugeordnet oder zur Weiterverarbeitung 8 zugelassen wird.

Die Ausschußerkennung aufgrund des Datenvergleichs 9 ist gegenüber der Qualitätsprüfung 4 mit erheblichen Aufwands- und Kosteneinsparungen verbunden.

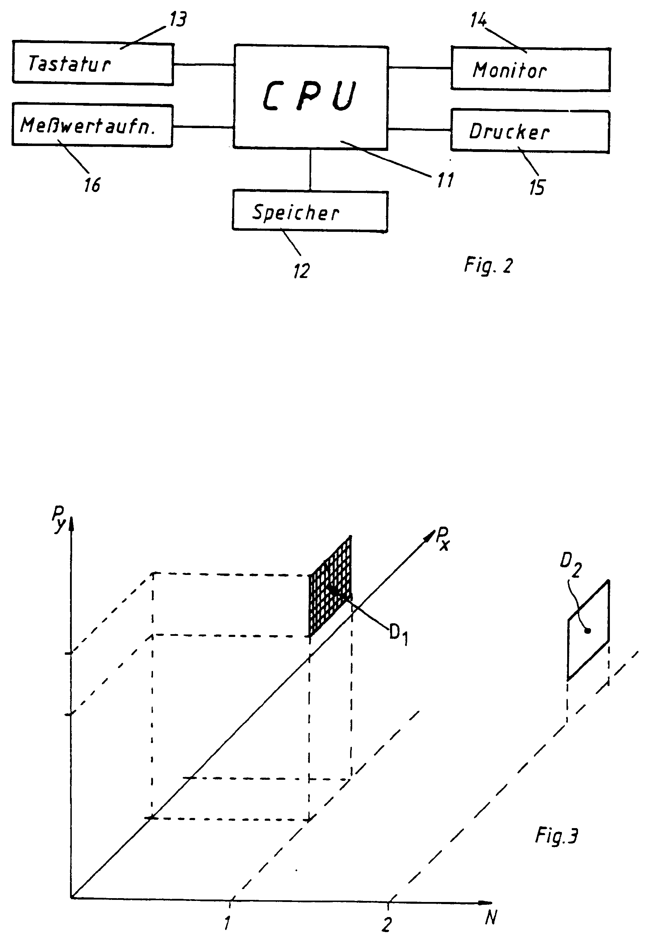

Fig. 2 zeigt ein Blockdiagramm einer Vorrichtung, womit das oben beschriebene Verfahren durchgeführt werden kann.

Das Kernstück der Vorrichtung ist eine zentrale Recheneinheit 11 mit einem Speicher 12 und verschiedenen Peripheriegeräten 13, 14, 15. Im einzelnen sind dies eine Tastatur 13 als Eingabeeinheit, ein Monitor 14 und ein Drucker 15 als Ausgabeeinheiten. Verschiedene Meßwerteaufnehmer 16, von denen aus Platzgründen nur einer dargestellt ist, sind an einen oder mehrere Eingänge der zentralen Recheneinheit 11 angeschlossen.

Über die Meßwertaufnehmer 16 kann die zentrale Recheneinheit 11 während der Herstellung die verschiedenen Parameterwerte erfassen und im Speicher 12 ablegen. Auf der zentralen Recheneinheit 11 läuft ein Programm nach dem in Fig. 1 dargestellten und oben beschriebenen Flußdiagramm ab. Auf dem Monitor 14 oder dem Drucker 15 können beispielsweise in Form einer Liste die Nummern der zur Weiterverarbeitung geeigneten Teile ausgegeben werden.

In Fig. 3 ist ein dreidimensionales Koordinatensystem zu sehen. Auf seinen Achsen sind der begrenzten Darstellungsmöglichkeiten wegen nur zwei Verfahrensparameter PX und PY sowie die laufende Nummer N der zur Referenzdatenermittlung herangezogenen Teile aufgetragen. In einem solchen Diagramm sind die Datensätze der einzelnen Teile jeweils durch Punkte gegeben.

So sind beispielsweise durch den Punkt D1 in diesem Diagramm zwei zugehörige Parameterwerte für PX (z. B. Kolbendruck) bzw. PY (z. B. Kolbengeschwindigkeit) auf deren Koordinatenachsen angegeben. Um einen solchen Datenpunkt wird nun ein Intervall für die Parameterwerte gelegt. Dies ergibt in der zeichnerischen Darstellung eine kleine Fläche um den Datenpunkt D1. Analog wird mit den Datensätzen der anderen Referenzteile, beispielsweise mit dem als Punkt D2 gekennzeichneten Datensatz des Teiles mit der laufenden Nummer N = 2 verfahren.

Bei allen nach Abschluß der Referenzdatenermittlung hergestellten Teile wird nun zunächst geprüft, ob ihr zugehöriger Datensatz, der sich aus den während der Herstellung vorliegenden Parameterwerten ergibt, in einem solchen Toleranzflächenelement liegt. Ist dies der Fall, so wird nachgeprüft, welche Qualität das diesen Toleranzflächenelement zugrundeliegende Referenzteil aufgewiesen hat. Liegt beispielsweise ein Datensatz eines Teils in dem zum Punkt D1 gehörenden, schraffierten Flächenelement, so entscheidet die in einer herkömmlichen Qualitätsprüfung untersuchte Qualität des Referenzteils mit der Nummer N = 1, ob das Teil aussortiert oder für die Weiterverarbeitung freigegeben wird.

Selbstverständlich lassen sich die gespeicherten Daten auch für eine Regelung der Anlage verwenden. Dies geschieht beispielsweise dann, wenn der Rechner erkennt, daß eine zunehmende Häufigkeit von "Schlechtteilen" auftritt, deren Parameter-Datensätze zu Ausschußteilen führt. Hier könnte dann ein Regeleingriff im Sinne einer Änderung der Daten von einzelnen Parametern erfolgen.

Weiterhin kann eine Vorrichtung zur Anzeige und/oder zur Aussortierung von qualitativ schlechten Teilen vorgesehen sein.

## Patentansprüche

1. Verfahren zur Ermittlung unzulässiger Abweichungen von Verfahrensparametern, insbesondere bei Druckgießmaschinen oder dgl., wobei empirisch ermittelte Parameter für die Herstellung guter Teile als Ausgangssollwerte eingegeben und die tatsächlich vorliegenden Istwerte der Parameter ständig erfaßt werden,
wobei zu jedem hergestellten Teil die jeweiligen Werte verschiedener Parameter als Datensatz erfaßt, zugeordnet und gespeichert werden,
wobei zunächst für eine vorgegebene Anzahl von Teilen, die durch eine Sichtprüfung und/oder eine zerstörungsfreie oder zerstörende Prüfung oder dgl. auf ihre Qualität oder Güte geprüft werden, in einer Analyse der jeweils verwendeten Datensätze der Parameterwerte diejenigen Datensätze ermittelt werden, die hierbei zur Herstellung von Gutteilen oder zur Herstellung von Ausschußteilen führten,
und dann jeder Datensatz der Parameterwerte für die in der Produktionsphase entstehenden Teile ohne weitere Qualitätsprüfung an diesen Teilen durch Vergleich mit den in der Analyse ermittelten Datensätzen der Parameterwerte beurteilt wird.

2. Verfahren nach Anspruch 1, wobei um jede Parametereinstellung der geprüften Teile, die zu einem guten Teil geführt hat, ein Toleranzintervall gelegt wird und daß die Feststellung, ob die Parametereinstellung während der späteren Fertigung eines anderen Teils sich außerhalb jedes der so erhaltenen Bereiche im Parameterbereich befand, als Erkennungsmerkmal für ein Ausschußteil dient.

3. Verfahren nach Anspruch 1, wobei zur Datenanalyse statistische Methoden verwendbar sind.

4. Verfahren nach Anspruch 1 oder 2, wobei in der statistischen Analyse der vorgegebenen Anzahl der Teile wiederholt auftretende gleiche Datensätze eines Parametersatzes erfaßbar sind und daß wiederholt auftretende Datensätze auf ihren relativen prozentualen Anteil an qualitativ guten Teilen ausgewertet werden.

5. Verfahren nach Anspruch 4, wobei die Häufigkeit der wiederholt auftretenden Datensätze die Verwendbarkeit dieser Datensätze als Auswahlkriterium für Ausschußteile gewichtet.

6. Verfahren nach Anspruch 1, wobei die ermittelten Abweichungen der Verfahrensparameter zur Regelung der Parameter-Einstellungen verwendbar sind.

7. Verfahren nach einem oder mehreren der vorhergehenden Ansprüche, wobei zur Erfassung von Werten/Daten und/oder zur Analyse dieser Werte/Daten und/oder zur Verwertung der Analyse und/oder zur Regelung der Einstellparameter der Druckgießmaschine eine Rechenanlage Verwendung findet.

8. Verfahren nach einem oder mehreren der vorhergehenden Ansprüche, wobei als vorgegebene Anzahl von Teilen zur Durchführung der Analyse ca. 100 bis 10.000 gefertigte Teile dienen.

9. Verfahren nach einem oder mehreren der vorhergehenden Ansprüche, wobei eine Vorrichtung zur Aussortierung von qualitativ schlechten Teilen vorgesehen ist.

## Claims

1. A method for detecting inadmissible deviations of procedure parameters, in particular in die casting machines or the like, in which case empirically ascertained parameters for the manufacture of satisfactory parts are entered as initial reference values and the actually existing actual values of the parameters are constantly ascertained, whereas for each part manufactured, the respective values of different parameters are ascertained as a set of data, collated and entered into the memory, in which case first of all for a given number of parts, which are checked as regards their quality or grade by a visual inspection and/or non-destructive or destructive testing or the like, in an analysis of the respectively used sets of data of the parameter values, those sets of data are detected, which in this case led to the manufacture of satisfactory parts or to the manufacture of reject parts, and then each set of data of parameter values for the parts resulting in the production phase, without further quality control of these parts, is judged by comparison with the sets of data of the parameter values detected in the analysis.

2. Method according to claim 1, whereby a tolerance interval is laid around each parameter setting of the checked parts, which has led to a satisfactory part and that the determination as to whether the parameter setting during the subsequent manufacture of another part was outside each of the ranges thus obtained in the parameter range, serves as a recognition feature for a reject part.

3. Method according to claim 1, whereby statistical methods can be used for the data analysis.

4. Method according to claim 1 or 2, whereby in the statistical analysis of the predetermined number of parts, repeatedly occurring identical sets of data of a set of parameters can be detected and that repeatedly occurring sets of data are evaluated as regards their relative percentage share of qualitatively satisfactory parts.

5. Method according to claim 5, whereby the frequency of the repeatedly occurring sets of data influence the usefulness of these sets of data as selection criterion for reject parts.

6. Method according to claim 1, whereby the detected deviations of the procedure parameters can be used for regulating the parameter settings.

7. Method according to one or more of the preceding claims, whereby a computer system is used for ascertaining values/data and/or for the analysis of these values/data and/or for evaluating the analysis and/or for regulating the setting parameters of the die casting machine.

8. Method according to one or more of the preceding claims, whereby approximately 100 to 10,000 manufactured parts serve as the predetermined number of parts for carrying out the analysis.

9. Method according to one or more of the preceding claims, whereby a device is provided for sorting out parts of poor quality.

## Revendications

1. Procédé pour détecter des écarts inadmissibles de paramètres de procédé, en particulier pour des machines de coulée sous pression ou analogues, des paramètres déterminés de façon empirique pour la fabrication de bonnes pièces étant entrés comme valeurs de consigne initiales et les valeurs réelles effectivement existantes des paramètres étant détectées de façon continue,
dans lequel, pour chaque pièce fabriquée, les valeurs respectives de différents paramètres sont détectées, associées et mémorisées comme jeu de données, et, tout d'abord, pour un nombre prédéfini de pièces, qui sont vérifiées par une inspection visuelle et/ou un examen destructif ou non destructif ou analogue concernant leur qualité, sont déterminés, dans une analyse des jeux de données à chaque fois utilisés des valeurs de paramètres, les jeux de données qui, dans ce cas, entraîneraient la fabrication de bonnes pièces ou la fabrication de pièces de rebut, et, ensuite, chaque jeu de données des valeurs des paramètres pour les pièces produites dans la phase de production est évalué sans autre examen de qualité sur ces pièces par comparaison avec les jeux de données, déterminés dans l'analyse, des valeurs des paramètres.

2. Procédé selon la revendication 1,
dans lequel, pour chaque réglage de paramètre des pièces testées, qui a mené à une bonne pièce, un intervalle de tolérances est établi, et la détermination concernant le fait de savoir si le réglage de paramètre pendant la fabrication ultérieure d'une autre pièce se trouve à l'extérieur de chacune des plages ainsi obtenues dans la plage de paramètre, sert comme caractéristique de reconnaissance pour une pièce de rebut.

3. Procédé selon la revendication 1,
dans lequel des méthodes statistiques sont utilisables pour l'analyse des données.

4. Procédé selon la revendication 1 ou 2,
dans lequel on peut déterminer des jeux de données identiques, existant de façon répétée dans l'analyse statistique du nombre prédéfini des pièces, d'un jeu de paramètres, et des jeux de données existant de façon répétée sont exploités, concernant leur partie relative selon un pourcentage, sur des pièces de bonne qualité.

5. Procédé selon la revendication 4,
dans lequel la fréquence des jeux de données se produisant de façon répétée pondère la possibilité d'utiliser ces jeux de données comme critère de choix pour des pièces de rebut.

6. Procédé selon la revendication 1,
dans lequel les écarts détectés des paramètres de procédé sont utilisables pour effectuer le réglage des paramètres.

7. Procédé selon une ou plusieurs des revendications précédentes,
dans lequel, pour détecter des valeurs/données et/ou pour l'analyse de ces valeurs/données et/ou pour l'exploitation de l'analyse et/ou pour la régulation des paramètres de réglage de la machine de coulée sous pression, il est utilisé une installation de calcul.

8. Procédé selon une ou plusieurs des revendications précédentes,
dans lequel, comme nombre prédéfini de pièces pour effectuer l'analyse, on utilise environ 100 à 10 000 pièces fabriquées.

9. Procédé selon une ou plusieurs des revendications précédentes,
dans lequel un dispositif pour trier les pièces qualitativement mauvaises est prévu.
